# EUROPEAN PATENT SPECIFICATION

(11) **EP 4 024 021 B1**
(45) Date of publication and mention of the grant of the patent: **04.01.2023**
(21) Application number: 21188398.8
(22) Date of filing: 29.07.2021
(51) Int. Cl.: G01L 1/22, B29C 45/76, G01B 7/16, G01L 1/26, G01L 5/00, G01B 5/00

(54) **STRAIN SENSOR MOUNTING DEVICE**
MONTAGEVORRICHTUNG FÜR EINEN DEHNUNGSSENSOR
DISPOSITIF DE MONTAGE DE CAPTEUR DE CONTRAINTE

(30) Priority: 04.01.2021 JP 2021000130
(43) Date of publication of application: 06.07.2022
(73) Proprietor: Minebea Mitsumi Inc., Kitasaku-gun Nagano 389-0293 (JP)
(72) Inventor: MURATA, Keisuke, Nagano, 389-0293 (JP)
(74) Representative: Novagraaf Group

(56) References cited:
- EP-A1- 1 857 799
- EP-A1- 2 072 983
- EP-A1- 2 851 649
- US-A1- 2005 126 302

## Description

### Technical Field

The present invention relates to a strain sensor mounting device.

### Background Art

In known art, a tie bar gauge equipped with a strain sensor is used to measure a physical quantity of strain (torsion, deflection, tension, or the like) at a surface of a tie bar in an injection molding machine. In the injection molding machine, a molded item of a desired shape is formed by injection filling a molten resin or molten plastic material into a cavity space formed when clamping a mold using a mold clamping mechanical portion, and then cooling the molten material.

In such a mold clamping mechanical portion used for opening and closing the mold of an injection molding machine, the mold is clamped at high pressure when filling the cavity with the molten material, but at this time, the tie bar used is formed by a rod-like post configured to support a template of the mold, guide opening and closing operations of the mold, and receive a mold clamping force. Such a tie bar is disposed in each of four corners of the mold, and four tie bars are normally used as a set.

In this way, since the tie bar is a metal post configured to receive the mold clamping force, it is important to detect surface strain caused by expansion and contraction of the tie bar, using the strain sensor of the tie bar gauge, and to calculate a force applied to the tie bar on the basis of this detection result.

In a case where the force applied to the tie bar can be calculated, it is possible to perform control so as to eliminate variations in the force applied to each of the four tie bars in order to equalize engagement of the mold, and it is also possible to prevent overload at the tie bars and freely control the mold clamping force.

In order to achieve this, the tie bar gauge needs to be accurately mounted to the tie bar. In known art, an applied pressure detection device is proposed that causes a pressure detection sensor (corresponding to a strain sensor) configured to detect an applied pressure or a tensile force applied to the tie bar to be in close contact with a surface of a tie bar by temporarily fixing, at the surface of the tie bar, the pressure detection sensor using an attachment, and then in this state, placing a band over the attachment to fasten the pressure detection sensor (see Patent Document 1, for example).

### Citation List

### Patent Literature

Patent Document 1: JP 2003-149060 A
Patent Document 2: EP 2 851 649 A1
Patent Document 3: EP 1 857 799 A1
Patent Document 4: EP 2 072 983 A1
Patent Document 5: US 2005/126302 A1

Document EP 2 851 649 A1 discloses a strain gauge holder including a holder body with guide grooves. The guide grooves which guide the gauge pressing members provided on at least one bracket members, and the strain gauges are pressed against the side surface of the object-to-be- measured.

Document EP 1 857 799 A1 discloses a fixing method of a strain measuring element. A belt-like member is wound around an outer circumference of a tie bar so as to retain the strain gauge fixing member while pressing against an outer circumferential surface of the tie bar. The belt-like member is clamped by a clamping device. A clamping force is generated by a resilient restoration force of a conical plate spring provided in the clamping device.

Document EP 2 072 983 A1 discloses a mould clamping force measuring sensor for measuring the strain produced in a tie bar which is used with a mould supporting mechanism part in an injection moulding machine. The disclosed device includes a first and second semi-elliptical annulus-like sensor holders which are connected to each other at respective ends to provide an elliptical annulus like configuration suitable for being installed on the outer circumference of a tie bar.

Document US 2005/126302 A1 discloses a clamping force sensor associated with a cuff-type locating seat. The locating seat includes two mating halves that are pivotally connected at one of two lateral ends via a hinge so as to close or open relative to each other and removably mount on the tie bar.

### Summary of Invention

### Technical Problem

In the applied pressure detection device of Patent Document 1, an operator mounts the attachment to the tie bar by opening the hands of the band with the pressure detection sensor being fitted into a sensor receiving portion of the attachment.

However, since the pressure detection sensor is simply in a state of being fitted into the sensor receiving portion of the attachment, there is a risk that the pressure detection sensor may fall out from the sensor receiving portion of the attachment when mounting the attachment to the tie bar. Therefore, there has been a demand to further improve mountability of a strain sensor portion to the tie bar.

The present invention has been made in light of the above-described background, and an object of the present invention is to provide a strain sensor mounting device with further improved mountability of a strain sensor portion to a tie bar.

### Solution to Problem

The above problems are solved by the present invention described below. Specifically, in a first embodiment, a strain sensor mounting device of the present invention comprises a strain gauge provided in close contact with a surface of a tie bar and configured to detect strain generated at the surface; an element integrally mounted with the strain gauge; a plate integrally attached at one side of the element and including side end portions, which are portions of the plate protruding from the side surfaces of the element; a mounting body including recessed portions engageable with the side end portions, the mounting body being mounted at the surface of the tie bar in a state of holding the element and while the recessed portions are engaged with the side end portions; and a fastening band that fastens the element from above the mounting body so as to cause the element to be in close contact with an outer peripheral surface of the tie bar.

Each of the recessed portions of the mounting body is preferably a groove having a U-shape in a cross section, and each of the side end portions is preferably held in a state of being slidable with respect to the groove.

A surface at an inner peripheral side of each of the recessed portions and a surface at an outer peripheral side of each of the side end portions are preferably slidable with respect to each other in a state of having a predetermined frictional force.

The strain sensor mounting device preferably includes a vertical wall portion configured to function as a stopper attached at one side of the element, and the mounting body preferably includes a wall portion configured to come into contact with the vertical wall portion and restrict movement of the element.

In a second embodiment, a strain sensor mounting device of the present invention comprises a strain gauge provided in close contact with a surface of an object to be measured and configured to detect strain generated at the surface;an element integrally mounted with the strain gauge;a plate integrally attached at one side of the element and including side end portions convexly protruding from both of side surfaces of the element;a pair of mounting bodies including recessed portions engageable with the side end portions, the mounting bodies being mounted at the surface of the object to be measured in a state of holding the element and while the recessed portions are engaged with the side end portions; and a joining jig that attaches the mounting bodies in a state of sandwiching the object to be measured by the mounting bodies.

The mounting body preferably includes a circular arc-shaped contact portion configured to come into contact with the surface of the tie bar, and a side wall portion configured to connect the contact portion and the recessed portion.

The plate preferably includes a flat main body portion formed of an L-shaped member in a side view and attached at one side of the element, and a vertical wall portion extending from an end portion of the main body portion in a perpendicular direction with respect to a flat surface of the main body portion and configured to function as a stopper.

According to the present invention, it is possible to realize a strain sensor mounting device with further improved mountability of a strain sensor portion at a tie bar.

### Brief Description of Drawings

FIG. 1 is a perspective view illustrating an overall configuration of a strain sensor mounting device according to a first embodiment of the present invention.
FIG. 2 is a perspective view illustrating an exploded configuration of the strain sensor mounting device according to the first embodiment of the present invention.
FIG. 3 is an external view illustrating a configuration of a tie bar gauge, a coil cable, and an input/output cable according to the first embodiment of the present invention.
FIG. 4 is a perspective view illustrating an external configuration of an element of the tie bar gauge according to the first embodiment of the present invention, and a front view illustrating a configuration of the tie bar gauge.
FIG. 5 is a perspective view describing when assembling the tie bar gauge and a mounting body according to the first embodiment of the present invention.
FIG. 6 is a perspective view illustrating a configuration of the element of the tie bar gauge according to the first embodiment of the present invention.
FIG. 7 is an external view illustrating a configuration of a fastening band according to the first embodiment of the present invention.
FIG. 8 is a perspective view illustrating a configuration of a tie bar gauge and mounting bodies according to a second embodiment of the present invention.
FIG. 9 is a front view illustrating the configuration of the tie bar gauge according to the second embodiment of the present invention.

### Description of Embodiments

### 1. Specific Example of First Embodiment

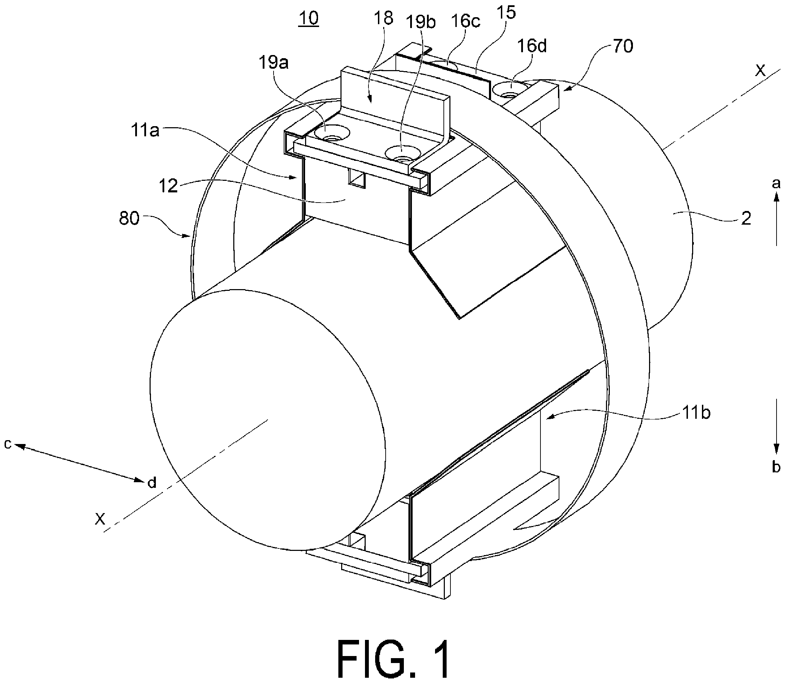

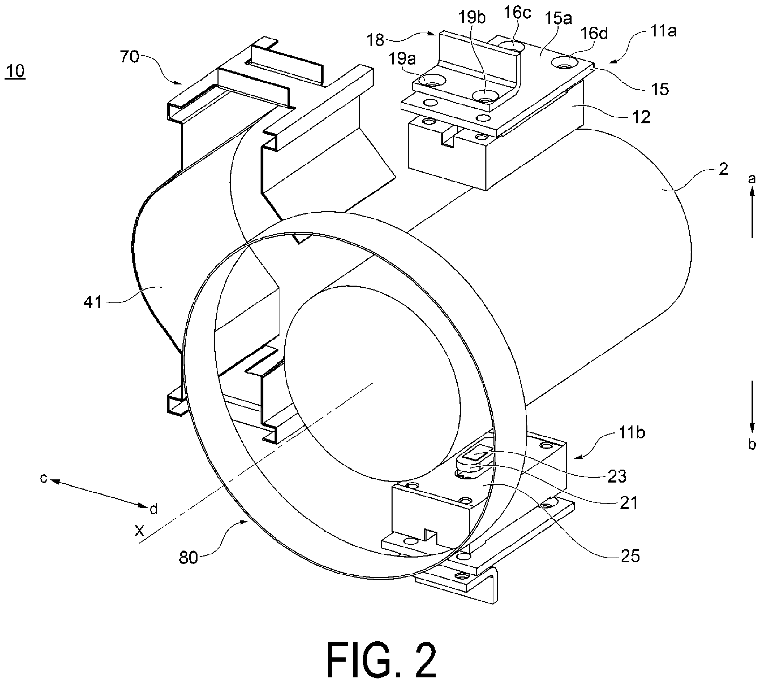

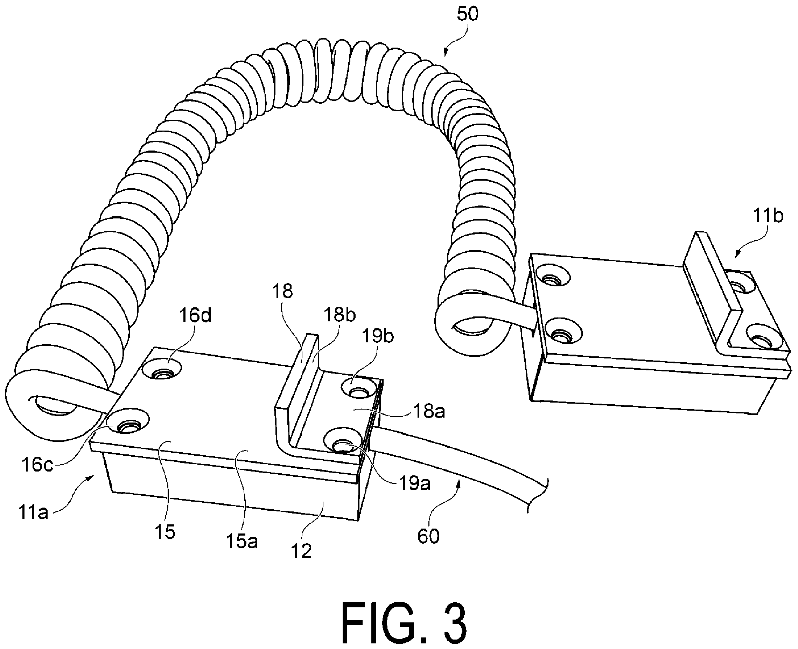

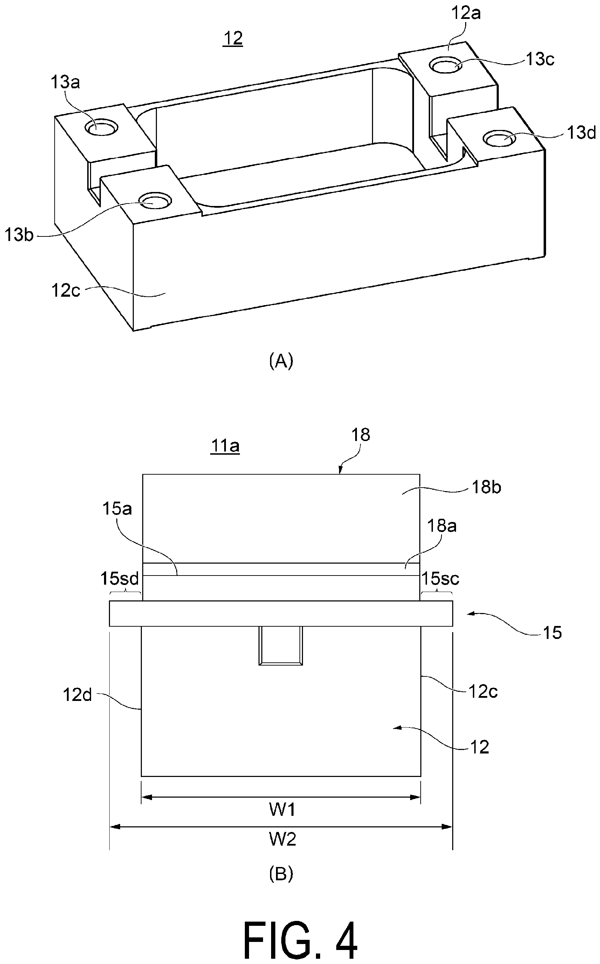

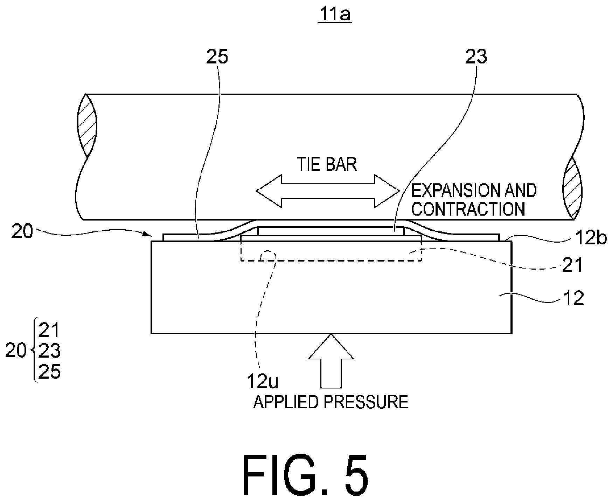

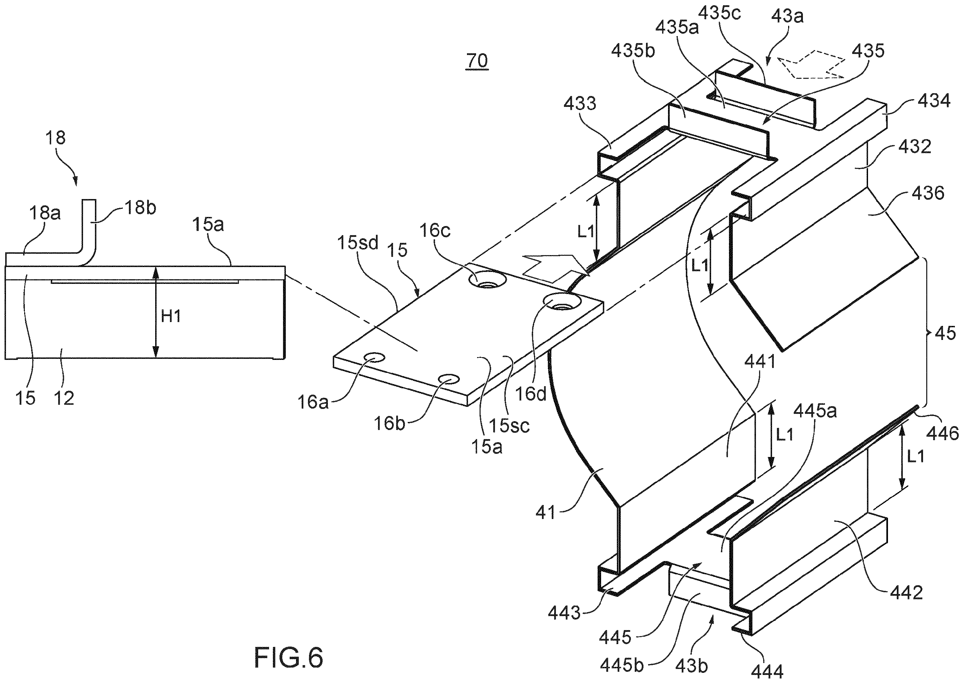

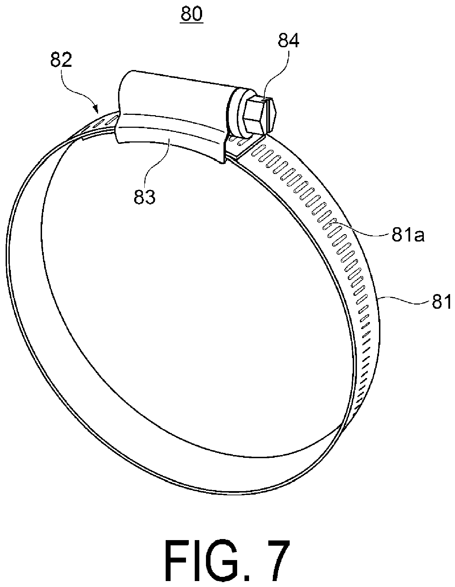

A first embodiment of the present invention will be described below with reference to FIG. 1 to FIG. 7. FIG. 1 is a perspective view illustrating an overall configuration of a strain sensor mounting device according to the first embodiment of the present invention. FIG. 2 is a perspective view illustrating an exploded configuration of the strain sensor mounting device according to the first embodiment of the present invention. FIG. 3 is an external view illustrating a configuration of a tie bar gauge, a coil cable, and an input/output cable according to the first embodiment of the present invention. FIG. 4 is a cross-sectional view illustrating a configuration of the tie bar gauge according to the first embodiment of the present invention. FIG. 5 is a perspective view describing when assembling the tie bar gauge and a mounting body according to the first embodiment of the present invention. FIG. 6 is a perspective view illustrating a configuration of the element of the tie bar gauge according to the first embodiment of the present invention. FIG. 7 is an external view illustrating a configuration of a fastening band according to the first embodiment of the present invention.

Note that in the description of the first embodiment, "upper side" and "lower side" refer to up and down directions in FIG. 1 to FIG.7, and do not necessarily coincide with up and down directions in the gravitational direction. Here, for convenience of description, a direction of an arrow a along a direction orthogonal to an axis X of a tie bar 2 is defined as the upper side or upward, and a direction of an arrow b is defined as the lower side or downward. Further, a direction of an arrow c moving away from the axis X is defined as an outer peripheral side or an outer side, and a direction of an arrow d approaching the axis X is defined as an inner peripheral side or an inner side.

As illustrated in FIG.1 to FIG. 7, a strain sensor mounting device 10 according to the first embodiment of the present invention includes a pair of tie bar gauges 11a, 11b (FIG. 1 to FIG. 3), a coiled cable (hereinafter simply referred to as a "coil cable") 50 (FIG. 3) electrically connecting the tie bar gauge 11a and the tie bar gauge 11b to each other, an input/output cable 60 (FIG. 3) connected to an external device, a mounting body 70 (FIG. 1, FIG. 2, and FIG. 6) that holds the tie bar gauges 11a, 11b and mounts the tie bar gauges 11a, 11b to the tie bar 2, and a fastening band 80 (FIG. 7) that fastens the tie bar gauges 11a, 11b from above the mounting body 70 so as to cause the tie bar gauges 11a, 11b to be in close contact with an outer peripheral surface of the tie bar 2 serving as an object to be measured.

The pair of tie bar gauges 11a, 11b both have the same basic configuration, but an amplifier (not illustrated) is built into the tie bar gauge 11a while the amplifier is not built into the tie bar gauge 11b. In addition, the input/output cable 60 is connected only to the tie bar gauge 11a.

The external device connected to the input/output cable 60 is, for example, a computer device, and detects strain generated at a surface of the tie bar 2 on the basis of a measurement value (resistance value) obtained by the tie bar gauges 11a, 11b.

As illustrated in FIG. 3, the pair of tie bar gauges 11a, 11b, the coil cable 50, and the input/output cable 60 are integrally attached at the strain sensor mounting device 10. Note that in FIG. 1 and FIG. 2, the coil cable 50 and the input/output cable 60 are omitted for convenience. In addition, as illustrated in FIG. 2, the pair of tie bar gauges 11a, 11b and the mounting body 70 are detachably provided in the strain sensor mounting device 10.

Both the tie bar gauges 11a, 11b have the same configuration except for whether the amplifier is built into the tie bar gauge 11a, 11b or not. Thus, a description will be given below focusing on the tie bar gauge 11a. The tie bar gauge 11a includes an element 12, a plate 15, and a stopper 18.

As illustrated in FIG. 4(A), the element 12 of the tie bar gauge 11a is a member formed from an aluminum alloy and has a substantially cuboid shape, and accommodates the amplifier (not illustrated) in an internal space. Note that the element 12 is not limited to an aluminum alloy and may be formed from various other metal materials.

Female screw portions 13a to 13d are formed at four corners of one surface (hereinafter also referred to as a "one side") 12a of the element 12. Here, the one surface 12a of the element 12 is a surface at a side facing the mounting body 70 to be described below, rather than a surface at a side facing the outer peripheral surface of the tie bar 2. Note that the amplifier accommodated in the element 12 is electrically connected to the coil cable 50 and the input/output cable 60.

As illustrated in FIG. 4(B), the plate 15 of the tie bar gauge 11a is a member formed from an aluminum alloy, having a thin plate shape and a substantially cuboid shape, and is placed and integrally fixed on the one surface 12a of the element 12. As illustrated in FIG. 1, FIG. 2, and FIG. 6, the plate 15 is formed with four through holes 16a to 16d at positions corresponding to the female screw portions 13a to 13d of the element 12. Incidentally, a countersunk portion corresponding to a countersunk screw is formed in each of these through holes 16c, 16d.

As illustrated in FIG. 4(B), a width W2 of the plate 15 in the lateral direction is formed to be larger than a width W1 of the element 12 in the lateral direction. Thus, when the plate 15 is integrally attached in a state of being placed on the one surface 12a of the element 12, since the width W2 of the plate 15 in the lateral direction is larger than the width W1 of the element 12 in the lateral direction, portions of the plate 15 protrude in a convex manner from side surfaces 12c, 12d of the element 12.

Here, the portions of the plate 15 that protrude in a convex manner from the side surfaces 12c, 12d of the element 12 are referred to as side end portions 15sc, 15sd, respectively. In other words, the side end portions 15sc, 15sd of the plate 15 are portions protruding from the side surfaces 12c, 12d of the element 12, respectively.

The stopper 18 of the tie bar gauge 11a is a member formed from stainless steel, having an L-shape in a side view, placed on one surface 15a of the plate 15, and integrally fixed together with the element 12. The stopper 18 includes a flat main body portion 18a placed on the one surface 15a of the plate 15, and a vertical wall portion 18b extending from an end portion of the main body portion 18a in a perpendicular direction with respect to a flat surface of the main body portion 18a. Note that the stopper 18 is not limited to stainless steel and may be formed from various other metal materials.

As illustrated in FIG. 3, in the main body portion 18a of the stopper 18, two through holes 19a, 19b are provided at positions corresponding to the two female screw portions 13a, 13b provided at one end in the longitudinal direction of the element 12. In these through holes 19a, 19b, countersunk portions similar to those of the through holes 16c, 16b of the plate 15 are formed.

Thus, in a state where the through holes 19a, 19b of the stopper 18, the through holes 16a, 16b provided at the one end of the plate 15 in the longitudinal direction, and the female screw portions 13a, 13b of the element 12 are positioned so as to correspond to each other, the stopper 18, the plate 15, and the element 12 are integrally attached and fixed to each other by countersunk screws at one end side in the longitudinal direction.

Similarly, in a state where the through holes 16c, 16d provided at the other end of the plate 15 in the longitudinal direction and the female screw portions 13c, 13d of the element 12 are positioned so as to correspond to each other, the plate 15 and the element 12 are integrally attached and fixed to each other by countersunk screws at the other end side in the longitudinal direction. As a result, the element 12, the plate 15, and the stopper 18 are integrated in a state of being in close contact with each other.

Furthermore, as illustrated in FIG. 5, the element 12 includes a rectangular recessed portion 12u formed to be slightly recessed with respect to an other surface 12b at the side in close contact with the outer peripheral surface of the tie bar 2, and a strain sensor portion 20 is accommodated in the recessed portion 12u. Note that in FIG. 5, for convenience, the plate 15 and the stopper 18 are omitted from the drawing.

In actuality, the element 12 includes a rectangular base 21 formed of an elastic body accommodated in the recessed portion 12u, a strain gauge portion 23 disposed on the base 21 and provided with a plurality of strain gauges formed from a metal resistive foil, and a protective film 25 formed from a metal thin foil and covering the entire strain gauge portion 23 from above.

The base 21 is a rectangular member formed of an elastic body made of a resin such as polyester, and is adhered in a state of being accommodated in the recessed portion 12u of the element 12. The base 21 is an insulator.

The strain gauge portion 23 attached at the base 21 is not only capable of measuring strain in the longitudinal direction at the outer peripheral surface of the tie bar 2 but also capable of measuring strain in a perpendicular direction orthogonal to the longitudinal direction, and has a full-bridge four-gauge method configuration using four strain gauges. However, the present invention is not limited to this configuration, and the strain gauge portion 23 may have a bridge circuit configuration of a two-gauge method using two strain gauges, or a bridge circuit configuration of a one-gauge method using one strain gauge.

The strain gauge portion 23 measures the strain generated at the outer peripheral surface of the tie bar 2 as a change in resistance value, amplifies a signal of the measurement result using the amplifier inside the element 12, and then outputs the signal to the external device via the input/output cable 60. Incidentally, the signal of the measurement result detected by the strain gauge portion 23 of the tie bar gauge 11b is transmitted to the amplifier of the tie bar gauge 11a via the coil cable 50, amplified via the amplifier, and then output to the external device via the input/output cable 60.

The protective film 25 is a rectangular thin metal foil affixed to the other surface 12b of the element 12 so as to entirely cover the strain gauge portion 23 and the base 21. This protective film 25 is a portion caused to come into close contact with the outer peripheral surface of the tie bar 2 when the tie bar gauge 11a is attached at the outer peripheral surface, and the strain gauge portion 23 comes into close contact with the outer peripheral surface of the tie bar 2 via the protective film 25.

The mounting body 70 is a member mounted at the outer peripheral surface of the tie bar 2 in a state where the above-described tie bar gauges 11a, 11b are held without allowing the tie bar gauges 11a, 11b to fall off, and is formed from a metal material having spring properties such as spring steel. However, the present invention is not limited to this configuration, and the mounting body 70 may be formed from a material such as a resin or a plastic having spring properties.

As illustrated in FIG. 6, in order to attach the mounting body 70 to be in close contact with the outer peripheral surface of the tie bar 2, the mounting body 70 is set to a predetermined length along the longitudinal direction of the tie bar 2, and includes an arc-shaped contact portion 41 having substantially the same radius as that of the outer peripheral surface of the tie bar 2, and holding portions 43a, 43b integrally connected to one and the other end edges of the arc shape of the contact portion 41 and configured to hold the tie bar gauges 11a, 11b.

An opening 45 is formed between the holding portion 43a and the holding portion 43b, and the mounting to the tie bar 2 is possible from this opening 45. Note that the holding portions 43a, 43b can further expand the opening 45, and can be mounted to the tie bar 2 having a different diameter.

The holding portion 43a and the holding portion 43b are provided at positions facing each other with the tie bar 2 interposed between the holding portion 43a and the holding portion 43b, and have the same basic configuration as each other. Thus, when the tie bar gauge 11a is held by the holding portion 43a, the tie bar gauge 11b is held by the holding portion 43b, and conversely, when the tie bar gauge 11b is held by the holding portion 43a, the tie bar gauge 11a is held by the holding portion 43b.

In this way, the holding portion 43a and the holding portion 43b basically have the same configuration, and first, the holding portion 43a will be described. The holding portion 43a is configured to include a side wall portion 431 extending linearly toward the outer side from the one end edge forming the circular arc shape of the contact portion 41, and a side wall portion 432 disposed facing the side wall portion 431 at a predetermined gap from the side wall portion 431, the side wall portion 431 and the side wall portion 432 being integrated by an arm portion 435. The arm portion 435 is provided at the center in the longitudinal direction of the side wall portion 431 and the side wall portion 432.

A length L1 in the lateral direction of the side wall portion 431 of the holding portion 43a is the same as a height HI obtained when the element 12 and the plate 15 of the tie bar gauge 11a are stacked on top of each other. In addition, the side wall portion 431 of the holding portion 43a is formed with a recessed portion 433 formed of a groove having a U-shape in a cross section and extending in the longitudinal direction along an upper end edge of the side wall portion 431.

This recessed portion 433 is a space for slidingly accommodating and holding the side end portion 15sc or 15sd of the plate 15 of the tie bar gauge 11a. A surface at the inner peripheral side of the recessed portion 433 is slidable, with a surface at the outer peripheral side of the side end portion 15sc, 15sd of the plate 15 in a state of having a slight frictional force. In other words, when the side end portion 15sc or 15sd of the plate 15 of the tie bar gauge 11a is accommodated in the recessed portion 433, it is preferable to have a frictional force large enough to stop the tie bar gauge 11a from slipping off from the recessed portion 433.

In the holding portion 43a, similarly, the length L1 in the lateral direction of the side wall portion 432 provided at a position facing the side wall portion 431 is the same as the height HI obtained when the element 12 and the plate 15 of the tie bar gauge 11a are stacked on top of each other. In addition, the side wall portion 432 of the holding portion 43a is also formed with a recessed portion 434 disposed at an end edge in the longitudinal direction of the side all portion 432 and formed of a groove having a U-shape in a cross section.

This recessed portion 434 is also a space for slidingly accommodating and holding the side end portion 15sc or 15sd of the plate 15 of the tie bar gauge 11a. Further, similarly, a surface at the inner peripheral side of the recessed portion 434 is slidable with the surface at the outer peripheral side of the side end portion 15sc, 15sd of the plate 15 in a state of having a slight frictional force. In this case also, when the side end portion 15sc or 15sd of the plate 15 of the tie bar gauge 11a is accommodated in the recessed portion 434, it is preferable to have a frictional force large enough to stop the tie bar gauge 11a from slipping off from the recessed portion 434.

Note that the side wall portion 432 of the holding portion 43a is integrally formed with a rectangular opening plate 436 inclined at a predetermined angle and extending diagonally downward from an end edge, of the side wall portion 432, at the opposite side from the recessed portion 434. The opening plate 436 of the side wall 432 is set to an angle and a length taking into account ease of mounting when attaching the mounting body 70 to the outer peripheral surface of the tie bar 2, and unlikeliness of the mounting body 70 falling out from the tie bar 2 after being attached.

Between the side wall portion 431 and the side wall portion 432 of the holding portion 43a, the arm portion 435 for integrally joining the side wall portion 431 and the side wall portion 432 together is provided. The arm portion 435 of the holding portion 43a is formed of a thin plate member, and is integrally formed with respect to an upper surface of the recessed portion 433 and an upper surface of the recessed portion 434 so as to connect the recessed portion 433 and the recessed portion 434 to each other.

The arm portion 435 of the holding portion 43a includes a flat portion 435a that is flat and flush with the upper surface of the recessed portion 433 and the upper surface of the recessed portion 434, and wall portions 435b, 435c perpendicular to the longitudinal direction of the recessed portions 433, 434 and vertically provided so as to extend upward with respect to the flat portion 435a from two end edges of the flat portion 435a.

The wall portions 435b, 435c of the arm portion 435 have substantially the same height as the height of the vertical wall portion 18b of the stopper 18 integrally fixed with the element 12 and the plate 15 of the tie bar gauge 11a. However, the present invention is not limited to this configuration, and as long as the wall portions 435b, 435c of the arm portion 435 can come into contact with the vertical wall portion 18b of the stopper 18, the two heights need not necessarily be the same.

The holding portion 43b is configured to include a side wall portion 441 extending linearly toward the outer side from the other end edge forming the circular arc shape of the contact portion 41, and a side wall portion 442 disposed facing the side wall portion 441 at a predetermined gap from the side wall portion 441, the side wall portion 441 and the side wall portion 442 being integrated by an arm portion 445. The arm portion 445 is provided at the center in the longitudinal direction of the side wall portion 441 and the side wall portion 442.

The length L1 in the lateral direction of the side wall portion 441 of the holding portion 43b is the same as the height HI obtained when the element 12 and the plate 15 of the tie bar gauge 11a are stacked on top of each other. In addition, the side wall portion 441 of the holding portion 43b is formed with a recessed portion 443 disposed at an end edge in the longitudinal direction of the side wall portion 441 and formed of a groove having a U-shape in a cross section.

This recessed portion 443 is a space for slidingly accommodating and holding the side end portion 15sc or 15sd of the plate 15 of the tie bar gauge 11a. A surface at the inner peripheral side of the recessed portion 443 is slidable with the surface at the outer peripheral side of the side end portion 15sc, 15sd of the plate 15 in a state of having a slight frictional force.

In the holding portion 43b, similarly, the length L1 in the lateral direction of the side wall portion 442 provided at a position facing the side wall portion 441 is the same as the height HI obtained when the element 12 and the plate 15 of the tie bar gauge 11a are stacked on top of each other. In addition, the side wall portion 442 of the holding portion 43b is also formed with a recessed portion 444 disposed at an end edge in the longitudinal direction of the side wall portion 442 and formed of a groove having a U-shape in a cross section.

This recessed portion 444 is also a space for slidingly accommodating and holding the side end portion 15sc or 15sd of the plate 15 of the tie bar gauge 11a. Further, similarly, a surface at the inner peripheral side of the recessed portion 444 is slidable with the surface at the outer peripheral side of the side end portion 15sc, 15sd of the plate 15 in a state of having a slight frictional force.

Note that the side wall portion 442 of the holding portion 43b is also integrally formed with a rectangular opening plate 446 inclined at a predetermined angle and extending diagonally upward from an end edge of the side wall portion 442 at the opposite side from the recessed portion 444. The opening plate 446 of the side wall portion 442 is set to an angle and a length taking into account the ease of mounting when attaching the mounting body 70 to the outer peripheral surface of the tie bar 2, and the unlikeliness of the mounting body 70 falling out from the tie bar 2 after being attached. Thus, a space between the opening plate 436 of the holding portion 43a and the opening plate 446 of the holding portion 43b forms the opening 45.

The side wall portion 441 and the side wall portion 442 of the holding portion 43b are both integrally joined together by the arm portion 445. The arm portion 445 of the holding portion 43b is also formed of a thin plate member and is integrally formed with respect to a lower surface of the recessed portion 443 and a lower surface of the recessed portion 444 so as to connect the recessed portion 443 and the recessed portion 444 to each other.

The arm portion 445 of the holding portion 43b includes a flat portion 435a that is flat and flush with the lower surface of the recessed portion 443 and the lower surface of the recessed portion 444, and wall portions 445b, 445c (not illustrated) perpendicular to the longitudinal direction of the recessed portions 443, 444 and vertically provided so as to extend downward with respect to the flat portion 445a from two end edges of the flat portion 445a.

The wall portions 445b, 445c of the arm portion 445 have substantially the same height as the height of the vertical wall portion 18b of the stopper 18 integrally fixed with the element 12 and the plate 15 of the tie bar gauge 11a. However, the present invention is not limited to this configuration, and as long as the wall portions 445b, 445c of the arm portion 445 can come into contact with the vertical wall portion 18b of the stopper 18, the two heights need not necessarily be the same.

As illustrated in FIG. 7, the fastening band 80 includes a band portion 81 having an annular shape and a predetermined width, and an adjustment portion 82 capable of making adjustments to reduce the diameter of the band portion 81. The band portion 81 is formed with a plurality of grooves 81a formed at the surface of the band portion 81 along the lateral direction at predetermined intervals. The adjustment portion 82 includes a housing 83 accommodating the band portion 81, and a screw 84 holding the band portion 81 via the housing 83 in a state where the diameter of the band portion 81 has been adjusted.

A screw portion (not illustrated) is formed at an outer peripheral surface of the screw 84, and the screw portion engages with the grooves 81a of the band portion 81 accommodated in the housing 83, thus maintaining a fastened state with respect to the mounting body 70 so that the diameter of the band portion 81 does not change.

Note that the width of the band portion 81 is slightly smaller than a distance between the wall portion 435b and the wall portion 435c of the arm portion 435, and the band portion 81 comes into contact with the flat portion 435a of the arm portion 435. In other words, the fastening band 80 mounts the mounting body 70 at the outer peripheral surface of the tie bar 2 using a predetermined pressure, in a state of the band portion 81 being in contact with the arm portion 435 of the holding portion 43a and the arm portion 445 of the holding portion 43b.

In the tie bar gauge 11a and the mounting body 70 having such configurations, first, the side end portions 15sc, 15sd of the plate 15 of the tie bar gauge 11a are engaged with and inserted by being caused to slide into the recessed portion 433 of the side wall portion 431 and the recessed portion 434 of the side wall portion 432 of the holding portion 43a.

After that, the wall portion 435b or the wall portion 435c of the arm portion 435 of the mounting body 70 is caused to come into contact with the vertical wall portion 18b of the stopper 18 of the tie bar gauge 11a to be stopped at that position. This position is a position where the strain gauge portion 23 of the tie bar gauge 11a is placed at the center in the longitudinal direction of the holding portion 43a, namely, is a position opposite to the flat portion 435a of the arm portion 435. In this way, the tie bar gauge 11a is brought into a state of being held by the holding portion 43 of the mounting body 70.

Note that the same applies to the relationship between the tie bar gauge 11b and the holding portion 43b, and thus, by following the above-described procedure, the tie bar gauge 11b can be brought into a state of being held by the holding portion 43b of the mounting body 70. In other words, the tie bar gauge 11a is held by the holding portion 43a of the mounting body 70, and the tie bar gauge 11b is held by the holding portion 43b of the mounting body 70.

Then, while the tie bar gauges 11a, 11b remain held by the mounting body 70, an operator expands the opening 45 by pushing to expand a gap between the opening plate 436 of the holding portion 43a and the opening plate 446 of the holding portion 43b, and the mounting body 70 is mounted at the outer peripheral surface of the tie bar 2. At this time, since there is a constant frictional force between the side end portions 15sc, 15sd of the plate 15, and the recessed portion 433 of the side wall portion 431 and the recessed portion 434 of the side wall portion 432 of the holding portion 43a, the tie bar gauges 11a, 11b do not fall out from the recessed portion 433 and the recessed portion 434.

Thus, the operator can easily and quickly mount the pair of tie bar gauges 11a, 11b at the outer peripheral surface of the tie bar 2 while the pair of tie bar gauges 11a, 11b remain held by the mounting body 70. After that, the operator fastens the band portion 81 of the fastening band 80 with the band portion 81 in contact with the arm portion 435 of the holding portion 43a and the arm portion 445 of the holding portion 43b of the mounting body 70, thus causing the pair of tie bar gauges 11a, 11b to be in close contact with the outer peripheral surface of the tie bar 2, obtaining a state in which strain at the outer peripheral surface of the tie bar 2 can be measured.

### 2. Specific Examples of Second Embodiment

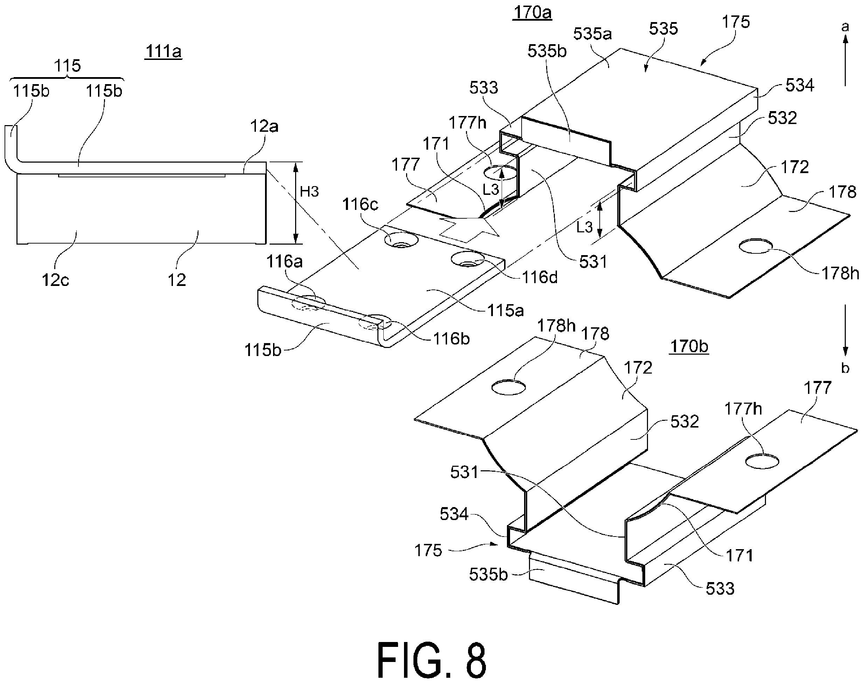

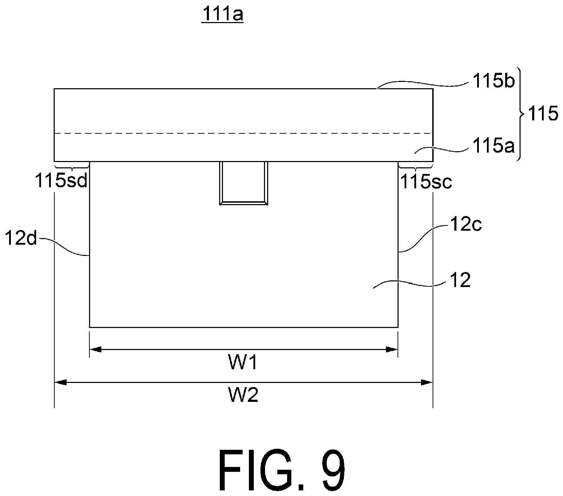

A second embodiment of the present invention will be described below with reference to FIG. 8 and FIG. 9. In FIG. 8, the same reference numerals are assigned to corresponding portions in FIG. 6. FIG. 8 is a perspective view illustrating a configuration of a tie bar gauge and mounting bodies according to the second embodiment of the present invention. FIG. 9 is a front view illustrating the configuration of the tie bar gauge according to the second embodiment of the present invention.

Note that, in the description of the second embodiment, similarly to the first embodiment, "upper side" and "lower side" refer to the up and down directions in FIG. 8. Further, in the figures, the direction of the arrow a is defined as the upper side or upward, and the direction of the arrow b is defined as the lower side or downward. Furthermore, the direction of the arrow c moving away from the axis X is defined as the outer peripheral side or the outer side, and the direction of the arrow d approaching the axis X is defined as the inner peripheral side or the inner side.

As illustrated in FIG. 8 in which the same reference numerals are assigned to corresponding portions in FIG. 6, a strain sensor mounting device 100 according to the second embodiment of the present invention is only different with respect to a pair of tie bar gauges 111a, 111b and a pair of mounting bodies 170a, 170b, and other components, namely, the coil cable 50 and the input/output cable 60. are the same. Thus, descriptions of the coil cable 50 and the input/output cable 60 will be omitted. Note that the fastening band 80 is not used. Here, since the tie bar gauges 111a, 111b have the same configuration, only the tie bar gauge 111a (and the mounting body 170a) is illustrated for the strain sensor mounting device 100 in FIG. 8.

Since the pair of tie bar gauges 111a, 111b have the same configuration, here, the tie bar gauge 111a will be described. The tie bar gauge 111a includes the element 12 and a plate 115. The element 12 is the same as the element 12 of the tie bar gauge 11a in the first embodiment.

As illustrated in FIG. 9, the plate 115 is a member formed from stainless steel, having a thin plate shape and a substantially L-shape in a cross section, and placed and integrally fixed on the one surface 12a of the element 12. This plate 115 not only functions as a plate, but also functions as a stopper. Note that the plate 115 is not limited to stainless steel and may be formed from various other metal materials.

The plate 155 is formed with four through holes 116a to 116d at positions corresponding to the female screw portions 13a to 13d of the element 12. Incidentally, a countersunk portion corresponding to a countersunk screw is also formed in these through holes 116c to 116d.

The width W2 of the plate 115 in the lateral direction is formed to be larger than the width W1 of the element 12 in the lateral direction. Thus, when the plate 115 is integrally attached in a state of being placed on the one surface 12a of the element 12, since the width W2 of the plate 115 in the lateral direction is larger than the width W1 of the element 12 in the lateral direction, portions of the plate 115 protrude in a convex manner from the side surfaces 12c, 12d of the element 12.

Here, the portions of the plate 115 protruding in a convex manner from the side surfaces 12c, 12d of the element 12 are referred to as side end portions 115sc, 115sd, respectively. In other words, the side end portions 115sc, 115sd of the plate 115 are portions of the plate 115 protruding from the side surfaces 12c, 12d of the element 12, respectively.

Further, the plate 115 includes a flat main body portion 115a placed on the one surface 12a of the element 12, and a vertical wall portion 115b extending from an end portion of the main body portion 115a in a direction perpendicular to a flat surface of the main body portion 115a, and functioning as a stopper.

The plate 115 and the element 12 are integrally attached and fixed by four countersunk screws when the plate 115 and element 12 are positioned so that the through holes 116a to 116d of the plate 115 correspond to the female screw portions 13a to 13d of the element 12.

The pair of mounting bodies 170a, 170b both have the same configuration and are mounted as a result of being joined together using a joining jig (not illustrated) in a state where the tie bar 2 is sandwiched by the pair of mounting bodies 170a, 170b. Here, since the mounting bodies 170a, 170b both have the same configuration, here, for convenience, only the mounting body 170a will be described below.

The mounting body 170a is a substantially semicircular member as a whole mounted at the outer peripheral surface of the tie bar 2 in a state of holding the above-described tie bar gauges 111a, 111b without allowing the tie bar gauges 111a, 111b to fall off, and is formed from a metal material having spring properties such as spring steel. However, the present invention is not limited to this configuration, and the mounting body 170a may be formed from a material such as a resin or a plastic having spring properties.

Since the mounting body 170a is attached in close contact with the outer peripheral surface of the tie bar 2, the mounting body 170a is set to a predetermined length along the longitudinal direction of the tie bar 2. The mounting body 170a includes arc-shaped contact portions 171, 172 having substantially the same radius as the radius of the outer peripheral surface of the tie bar 2, a holding portion 175 integrally connected to both of the contact portions 171, 172 and holding the tie bar gauge 111a or 111b, and flat plate-shaped opening plates 177, 178 linearly extending from outer end portions of the contact portions 171, 172 further toward the outer side.

The contact portions 171, 172 are arc-shaped portions set to a predetermined length along the longitudinal direction of the tie bar 2, and are disposed so that both are symmetric to each other at either side of the holding portion 175.

The holding portion 175 is a portion with a substantially reverse U-shape in a cross section, and is configured such that a side wall portion 531 linearly extending upward from one end edge forming the circular arc shape of the contact portion 171, 172, and a side wall portion 532 disposed facing the side wall portion 531 with a predetermined gap from the side wall portion 531 are integrated by an arm portion 535.

A length L3 in the lateral direction of the side wall portion 531 of the holding portion 175 is the same as a height H3 obtained when the element 12 and the plate 115 of the tie bar gauge 111a are stacked on top of each other. In addition, the side wall portion 531 of the holding portion 175 is formed with a recessed portion 533 formed of a groove having a U-shape in a cross section and extending in the longitudinal direction along an upper end edge of the side wall portion 531.

This recessed portion 533 is a space for slidingly accommodating and holding the side end portion 115sc or 115sd of the plate 115 of the tie bar gauge 111a. A surface at the inner peripheral side of the recessed portion 533 is slidable with a surface at the outer peripheral side of the side end portion 115sc, 115sd of the plate 115 in a state of having a slight frictional force.

In the holding portion 175, similarly, the length L3 in the lateral direction of the side wall portion 532 provided at a position facing the side wall portion 531 is the same as the height H3 obtained when the element 12 and the plate 115 of the tie bar gauge 111a are stacked on top of each other. In addition, the side wall portion 532 of the holding portion 175 is also formed with a recessed portion 534 disposed at an end edge in the longitudinal direction of the side wall portion 532 and formed of a groove having a U-shape in a cross section.

This recessed portion 534 is also a space for slidingly accommodating and holding the side end portion 115sc or 115sd of the plate 115 of the tie bar gauge 111a. Further, similarly, a surface at the inner peripheral side of the recessed portion 534 is slidable with the surface at the outer peripheral side of the side end portion 115sc, 115sd of the plate 115 in a state of having a slight frictional force. In other words, when the side end portion 115sc or 115sd of the plate 115 of the tie bar gauge 111a is accommodated in the recessed portion 533, 534, it is preferable to have a frictional force large enough to stop the tie bar gauge 111a from slipping off from the recessed portion 533, 534.

The arm portion 535 of the holding portion 175 includes a flat portion 535a that is flat and parallel to the opening plates 177, 178, and a vertical wall portion 535b extending upward perpendicularly with respect to the flat portion 535a from one end edge of the flat portion 535a. In this case, the vertical wall portion 535b is vertically provided only at the one end edge of the flat portion 535a, but may be vertically provided at the other end edge of the flat portion 535a. In other words, the vertical wall portion 535b may be provided at both the end edges of the flat portion 535a.

Through holes 177h, 178 h are formed at the center in the longitudinal direction of the opening plates 177, 178, respectively. Thus, both the mounting bodies 170a, 170b are attached using bolts and nuts of the joining jig (not illustrated) in a state where the through holes 177h, 178 h of the opening plates 177, 178 at the mounting body 170a are disposed facing the through holes 177h, 178 h of the opening plates 177, 178 at the mounting body 170b. As a result, mounting is possible while the tie bar 2 is sandwiched by the pair of mounting bodies 170a, 170b.

In the tie bar gauge 111a and the pair of mounting bodies 170a, 170b having such configurations, first, the side end portions 115sc, 115sd of the plate 115 of the tie bar gauge 111a are engaged with and inserted by being caused to slide into the recessed portions 533, 534 of the holding portion 175.

After that, the vertical wall portion 535b of the arm portion 535 of the mounting body 170a is caused to come into contact with the vertical wall portion 115b of the plate 115 of the tie bar gauge 111a and is stopped at that position. This position is a position where the strain gauge portion 23 of the tie bar gauge 111a is at the center in the longitudinal direction of the flat portion 535a of the arm portion 535 of the holding portion 175, namely, is a position opposite to the flat portion 535a of the arm portion 535. In this way, the tie bar gauge 111a is brought into a state of being held by the holding portion 175 of the mounting body 170a.

Note that the relationship between the tie bar gauge 111b and the holding portion 175 of the mounting body 170b (not illustrated) is the same, and thus, by following the above-described procedure, the tie bar gauge 111b can be brought into a state of being held by the holding portion 175 of the mounting body 170b. In other words, the tie bar gauge 111a is held by the holding portion 175 of the mounting body 170a, and the tie bar gauge 111b is held by the holding portion 175 of the mounting body 170b.

Then, while the tie bar gauges 111a, 111b remain held by the mounting bodies 170a, 170b, the operator covers the tie bar 2 with the mounting bodies 170a, 170b from the outer side, and joins the mounting bodies 170a, 170b together using the bolts and nuts of the joining jig. At this time, since there is a constant frictional force between the side end portions 115sc, 115sd of the plate 115, and the recessed portion 533 and the recessed portion 534 of the holding portion 175, the tie bar gauges 111a, 111b do not fall out.

Thus, while the pair of tie bar gauges 111a, 111b remain held by the mounting bodies 170a, 170b, the operator can easily and quickly mount the pair of tie bar gauges 111a, 111b at the outer peripheral surface of the tie bar 2. After that, in the state of the tie bar 2 being sandwiched by the pair of mounting bodies 170a, 170b, the operator joins the pair of mounting bodies 170a, 170b and the tie bar 2 together using the joining jig so that the pair of mounting bodies 170a, 170b and the tie bar 2 come into close contact with each other. As a result, the operator can cause the pair of tie bar gauges 111a, 111b to be in close contact with the outer peripheral surface of the tie bar 2 using the mounting bodies 170a, 170b, obtaining a state where strain at the outer peripheral surface of the tie bar 2 can be measured.

### 4. Other Embodiments

Note that in the first and second embodiments described above, a case of configuring the element 12 and the plate 15, 115 as separate bodies is described, but the present invention is not limited to this configuration. The element 12 and the plate 15, 115 may be integrally formed so that the side end portions 15sc, 15sd, 115sc and 115sd protrude from the side surfaces 12c, 12d at both sides of the element 12. In other words, the element 12 itself may include the side end portions 15sc, 15sd, 115sc, and 115sd.

### Reference Signs List

10, 100 Strain sensor mounting device
11a, 11b, 111a, 111b Tie bar gauge
12 Element
15, 115 Plate
15sc, 15sd, 115sc, 115sd Side end portion
18 Stopper
18a, 115a Main body portion
18b, 115b, 535b Vertical wall portion
20 Strain sensor portion
21 Base
23 Strain gauge
25 Protective film
41, 171, 172 Contact portion
43a, 43b, 175 Holding portion
45 Opening
50 Coil cable
60 Input/output cable
70, 170a, 170b Mounting body
80 Fastening band
81 Band portion
82 Adjustment portion
83 Housing
84 Screw
431, 432, 441, 442, 531, 532 Side wall portion
433, 434, 443, 444, 533, 534 Recessed portion
435, 445, 535 Arm portion
435a, 535a Flat portion
435b, 435c, 445b, 445c Wall portion
177, 178, 436 Opening plate

## Claims

1. A strain sensor mounting device (10) comprising:
a strain gauge (23) provided in close contact with a surface of a tie bar (2) and configured to detect strain generated at the surface;
an element (12) integrally mounted with the strain gauge (23); **characterised by**,
a plate (15) integrally attached at one side of the element (12) and including side end portions (15sc, 15sd)
which are portions of the plate (15) protruding from the side surfaces (12c, 12d) of the element (12);
a mounting body (70) including recessed portions (433, 434) engageable with the side end portions (15sc, 15sd), the mounting body (70) being mounted at the surface of the tie bar (2) in a state of holding the element (12) and while the recessed portions (433, 434) are engaged with the side end portions (15sc, 15sd); and
a fastening band (80) that fastens the element (12) from above the mounting body (70) so as to cause the element to be in close contact with an outer peripheral surface of the tie bar (2).

2. The strain sensor mounting device (10) according to claim 1, wherein
each of the recessed portions (433, 434) of the mounting body (70) is a groove having a U-shape in a cross section, and each of the side end portions (15sc, 15sd) is held in a state of being slidable with respect to the groove.

3. The strain sensor mounting device (10) according to claim 1, wherein
a surface at an inner peripheral side of each of the recessed portions (433, 434) and a surface at an outer peripheral side of each of the side end portions (15sc, 15sd) are slidable with respect to each other in a state of having a predetermined frictional force.

4. The strain sensor mounting device (10) according to claim 1, comprising:
a vertical wall portion (18b, 115b) configured to function as a stopper attached at one side (12a) of the element (12), wherein
the mounting body (70, 170a) includes a wall portion (435b, 435c, 535b) configured to come into contact with the vertical wall portion (18b, 115b) and restrict movement of the element (12).

5. A strain sensor mounting device (100) comprising:
a strain gauge (23) provided in close contact with a surface of a tie bar (2) and configured to detect strain generated at the surface;
an element (12) integrally mounted with the strain gauge (23); **characterised by**,
a plate (115) integrally attached at one side of the element (12) and including side end portions (115sc, 115sd), which are portions of the plate (115) protruding from the side surfaces (12c, 12d) of the element (12);
a pair of mounting bodies (170a, 170b) including recessed portions (533, 534) engageable with the side end portions (115sc, 115sd), the mounting bodies (170a, 170b) being mounted at the surface of the tie bar (2) in a state of holding the element (12) and while the recessed portions (533, 534) are engaged with the side end portions (115sc, 115sd); and
a joining jig that attaches the mounting bodies (170a, 170b) in a state of sandwiching the tie bar (2) by the mounting bodies (170a, 170b).

6. The strain sensor mounting device (100) according to claim 5, wherein
the mounting body (170a) includes a circular arc-shaped contact portion (171, 172) configured to come into contact with the surface of the tie bar (2), and a side wall portion (531, 532) configured to connect the contact portion (171, 172) and the recessed portion (533, 534).

7. The strain sensor mounting device (100) according to claim 5, wherein
the plate (115) includes a flat main body portion (115a) formed of an L-shaped member in a side view and attached at one side (12a) of the element (12), and a vertical wall portion (115b) extending from an end portion of the main body portion (115a) in a perpendicular direction with respect to a flat surface of the main body portion (115a) and configured to function as a stopper.

## Patentansprüche

1. Dehnungssensormontagevorrichtung (10), umfassend:
einen Dehnungsmesser (23), der in enger Berührung mit einer Oberfläche einer Führungsstange (2) bereitgestellt und konfiguriert ist, um eine Dehnung, die an der Oberfläche erzeugt wird, zu erfassen;
ein Element (12), das mit dem Dehnungsmesser (23) einstückig montiert ist; **gekennzeichnet durch**
eine Platte (15), die an einer Seite des Elements (12) einstückig angebracht ist und Seitenendabschnitte (15sc, 15sd) einschließt,
die Abschnitte der Platte (15) sind, die von den Seitenoberflächen (12c, 12d) des Elements (12) vorspringen;
einen Montagekörper (70), der ausgesparte Abschnitte (433, 434) einschließt, die mit den Seitenendabschnitten (15sc, 15sd) in Eingriff bringbar sind, wobei der Montagekörper (70) an der Oberfläche der Führungsstange (2) in einem Zustand eines Haltens des Elements (12) und während die ausgesparten Abschnitte (433, 434) mit den Seitenendabschnitten (15sc, 15sd) in Eingriff gebracht sind montiert ist; und
ein Befestigungsband (80), das das Element (12) von oberhalb des Montagekörpers (70) befestigt, um das Element zu veranlassen, um mit einer Außenumfangsoberfläche der Führungsstange (2) in enger Berührung zu sein.

2. Dehnungssensormontagevorrichtung (10) nach Anspruch 1, wobei
jeder der ausgesparten Abschnitte (433, 434) des Montagekörpers (70) eine Nut, die eine U-Form in einem Querschnitt aufweist, ist und jeder der Seitenendabschnitte (15sc, 15sd) in einem Zustand eines Verschiebbarseins in Bezug auf die Nut gehalten wird.

3. Dehnungssensormontagevorrichtung (10) nach Anspruch 1, wobei
eine Oberfläche an einer Innenumfangsseite von jedem der ausgesparten Abschnitte (433, 434) und einer Oberfläche an einer Außenumfangsseite von jedem der Seitenendabschnitte (15sc, 15sd) in einem Zustand eines Aufweisens einer zuvor bestimmten Reibungskraft in Bezug aufeinander verschiebbar sind.

4. Dehnungssensormontagevorrichtung (10) nach Anspruch 1, umfassend:
einen vertikalen Wandabschnitt (18b, 115b), der konfiguriert ist, um als ein Anschlag, der an einer Seite (12a) des Elements (12) angebracht ist, zu fungieren, wobei
der Montagekörper (70, 170a) einen Wandabschnitt (435b, 435c, 535b) einschließt, der konfiguriert ist, um mit dem vertikalen Wandabschnitt (18b, 115b) in Berührung zu kommen und eine Bewegung des Elements (12) einzuschränken.

5. Dehnungssensormontagevorrichtung (100), umfassend:
einen Dehnungsmesser (23), der in enger Berührung mit einer Oberfläche einer Führungsstange (2) bereitgestellt und konfiguriert ist, um die Dehnung, die an der Oberfläche erzeugt wird, zu erfassen;
ein Element (12), das mit dem Dehnungsmesser (23) einstückig montiert ist; **gekennzeichnet durch,**
eine Platte (115), die an einer Seite des Elements (12) einstückig angebracht ist und Seitenendabschnitte (115sc, 115sd) einschließt, die Abschnitte der Platte (115) sind, die von den Seitenoberflächen (12c, 12d) des Elements (12) vorspringen;
ein Paar Montagekörper (170a, 170b), die ausgesparte Abschnitte (533, 534) einschließen, die mit den seitlichen Endabschnitten (115sc, 115sd) in Eingriff bringbar sind, wobei die Montagekörper (170a, 170b) an der Oberfläche der Führungsstange (2) in einem Zustand des Haltens des Elements (12) und während die ausgesparten Abschnitte (533, 534) mit den seitlichen Endabschnitten (115sc, 115sd) in Eingriff gebracht sind montiert sind; und
einen Verbindungswerkstückspanner, der die Montagekörper (170a, 170b) in einem Zustand eines Einschiebens der Führungsstange (2) durch die Montagekörper (170a, 170b) anbringt.

6. Dehnungssensormontagevorrichtung (100) nach Anspruch 5, wobei
der Montagekörper (170a) einen kreisförmigen bogenförmigen Berührungsabschnitt (171, 172), der konfiguriert ist, um mit der Oberfläche der Führungsstange (2) in Berührung zu kommen, und einen Seitenwandabschnitt (531, 532) einschließt, der konfiguriert ist, um den Berührungsabschnitt (171, 172) und den ausgesparten Abschnitt (533, 534) zu vereinigen.

7. Dehnungssensormontagevorrichtung (100) nach Anspruch 5, wobei
die Platte (115) einen flachen Hauptkörperabschnitt (115a), der aus einem L-förmigen Bauteil in einer Seitenansicht ausgebildet ist und an einer Seite (12a) des Elements (12) angebracht ist, und einen vertikalen Wandabschnitt (115b) einschließt, der sich von einem Endabschnitt des Hauptkörperabschnitts (115a) in einer senkrechten Richtung in Bezug auf eine flache Oberfläche des Hauptkörperabschnitts (115a) erstreckt und konfiguriert ist, um als ein Anschlag zu fungieren.

## Revendications

1. Dispositif de montage de capteur de contrainte (10) comprenant :
une jauge de contrainte (23) fournie en contact étroit avec une surface d'une barre de liaison (2) et configurée pour détecter une contrainte générée au niveau de la surface ;
un élément (12) monté intégralement avec la jauge de contrainte (23) ; **caractérisé par,**
une plaque (15) fixée intégralement au niveau d'un côté de l'élément (12) et incluant des parties d'extrémité latérales (15sc, 15sd) qui sont des parties de la plaque (15) faisant saillie à partir des surfaces latérales (12c, 12d) de l'élément (12) ;
un corps de montage (70) incluant des parties évidées (433, 434) pouvant venir en prise avec les parties d'extrémité latérales (15sc, 15sd), le corps de montage (70) étant monté au niveau de la surface de la barre de liaison (2) dans un état de maintien de l'élément (12) et tandis que les parties évidées (433, 434) sont en prise avec les parties d'extrémité latérales (15sc, 15sd) ; et
une bande de serrage (80) qui serre l'élément (12) à partir du dessus du corps de montage (70) de manière à amener l'élément à être en contact étroit avec une surface périphérique externe de la barre de liaison (2).

2. Dispositif de montage de capteur de contrainte (10) selon la revendication 1, dans lequel
chacune des parties évidées (433, 434) du corps de montage (70) est une rainure ayant une forme en U dans une section transversale, et chacune des parties d'extrémité latérales (15sc, 15sd) est maintenue dans un état de coulissement par rapport à la rainure.

3. Dispositif de montage de capteur de contrainte (10) selon la revendication 1, dans lequel
une surface au niveau d'un côté périphérique interne de chacune des parties évidées (433, 434) et une surface au niveau d'un côté périphérique externe de chacune des parties d'extrémité latérales (15sc, 15sd) peuvent coulisser l'une par rapport à l'autre dans un état ayant une force de frottement prédéterminée.

4. Dispositif de montage de capteur de contrainte (10) selon la revendication 1, comprenant :
une partie de paroi verticale (18b, 115b) configurée pour fonctionner en guise de butée fixée au niveau d'un côté (12a) de l'élément (12), dans lequel
le corps de montage (70, 170a) inclut une partie de paroi (435b, 435c, 535b) configurée pour venir en contact avec la partie de paroi verticale (18b, 115b) et restreindre un mouvement de l'élément (12).

5. Dispositif de montage de capteur de contrainte (100) comprenant :
une jauge de contrainte (23) fournie en contact étroit avec une surface d'une barre de liaison (2) et configurée pour détecter une contrainte générée au niveau de la surface ;
un élément (12) monté intégralement avec la jauge de contrainte (23) ; **caractérisé par,**
une plaque (115) fixée intégralement au niveau d'un côté de l'élément (12) et incluant des parties d'extrémité latérales (115sc, 115sd), qui sont des parties de la plaque (115) faisant saillie à partir des surfaces latérales (12c, 12d) de l'élément (12) ;
une paire de corps de montage (170a, 170b) incluant des parties évidées (533, 534) pouvant venir en prise avec les parties d'extrémité latérales (115sc, 115sd), les corps de montage (170a, 170b) étant montés au niveau de la surface de la barre de liaison (2) dans un état de maintien de l'élément (12) et tandis que les parties évidées (533, 534) sont en prise avec les parties d'extrémité latérales (115sc, 115sd) ; et
un gabarit de jonction qui fixe les corps de montage (170a, 170b) dans un état de prise en sandwich de la barre de liaison (2) par les corps de montage (170a, 170b).

6. Dispositif de montage de capteur de contrainte (100) selon la revendication 5, dans lequel
le corps de montage (170a) inclut une partie de contact en forme d'arc circulaire (171, 172) configurée pour venir en contact avec la surface de la barre de liaison (2), et une partie de paroi latérale (531, 532) configurée pour relier la partie de contact (171, 172) et la partie évidée (533, 534).

7. Dispositif de montage de capteur de contrainte (100) selon la revendication 5, dans lequel
la plaque (115) inclut une partie de corps principal plate (115a) façonnée à partir d'un organe en forme de L dans une vue latérale et fixée au niveau d'un côté (12a) de l'élément (12), et une partie de paroi verticale (115b) s'étendant à partir d'une partie d'extrémité de la partie de corps principal (115a) dans une direction perpendiculaire par rapport à une surface plate de la partie de corps principal (115a) et configurée pour fonctionner en guise de butée.
